(19) **Europäisches Patentamt**

**European Patent Office**

**Office européen des brevets**

(11) Publication number : **0 412 686 B1**

(12) # EUROPEAN PATENT SPECIFICATION

(45) Date of publication of patent specification :
09.03.94 Bulletin 94/10

(51) Int. Cl.⁵ : **C09C 1/36, C09D 5/08**

(21) Application number : **90308223.8**

(22) Date of filing : **26.07.90**

(54) **Corrosion inhibiting pigment.**

(30) Priority : **08.08.89 GB 8918056**

(43) Date of publication of application :
**13.02.91 Bulletin 91/07**

(45) Publication of the grant of the patent :
**09.03.94 Bulletin 94/10**

(84) Designated Contracting States :
**BE CH DE DK FR IT LI NL SE**

(56) References cited :
**EP-A- 0 046 057**
**EP-A- 0 122 781**
**FR-A- 860 301**
**US-A- 2 212 935**
**US-A- 2 913 419**
**US-A- 3 640 743**

(56) References cited :
**World Surface Coatings Abstracts, Vol. 55, No. 485, November 1982, Old Woking, Surrey, U.K. page 1483, ref. no. 82/8035; & SU-A-854966 World Surface Coatings Abstracts, Vol. 62, No. 560, February 1989, Oxford, GB, p. 167, ref. no 89/00759; T. FLETCHER: "Ion exchange technology in anticorrosive protection"**

(73) Proprietor : **TIOXIDE GROUP LIMITED Tioxide House 137-143 Hammersmith Road London W14 0QL (GB)**

(72) Inventor : **Inchley, Paul 16 Scholla View Northallerton, North Yorkshire (GB)**

(74) Representative : **Jackson, John Derek Tioxide Group Limited Patent Department Haverton Hill Road Billingham, Cleveland TS23 1PS (GB)**

Jouve, 18, rue Saint-Denis, 75001 PARIS

## Description

This invention relates to corrosion inhibitors suitable for incorporation into protective coatings to methods of producing the corrosion inhibitors and to coatings containing them.

It is known to produce corrosion inhibitors comprising particles of silica or alumina having inhibiting cations chemically bound to the surface by ion-exchange.

It has now been shown that an anticorrosive pigment can be produced by chemically binding inhibiting cations to the surface of titanium dioxide particles which have been coated with silica or alumina using an ion-exchange technique. The product thus formed is an effective white pigment but also, surprisingly, possesses more corrosion inhibiting ability than the known silica corrosion inhibitors described above.

According to the present invention a corrosion inhibiting pigment comprises particles of titanium dioxide having an outer coating of hydrous silica and/or hydrous alumina said outer coating being present in an amount of at least 5 per cent by weight expressed as total oxides ($SiO_2 + Al_2O_3$) on weight of $TiO_2$ and having corrosion inhibiting cations chemically bound to the said coating of silica or alumina by ion-exchange in an amount of at least 0.1 millimoles per gram based on weight of corrosion inhibiting pigment, the said corrosion inhibiting cations being releasable by further ion-exchange.

According to the invention also a method for the manufacture of a corrosion inhibiting pigment comprises contacting titanium dioxide particles having an outer coating of hydrous silica and/or hydrous alumina which said outer coating is present in an amount of at least 5 per cent by weight expressed as total oxides on weight of $TiO_2$ and has a proportion of hydroxyl groups on the surface with an alkaline solution containing corrosion inhibiting cations, the pH of the solution being sufficiently high to remove protons from the said hydroxyl groups but not greater than 10.5 when the said outer coating contains hydrous silica or 12.5 when the said outer coating is hydrous alumina alone.

A further embodiment of the invention is a protective coating composition containing the corrosion inhibiting pigment hereinbefore described.

The titanium dioxide particles which are used to form the pigments of the present invention can be made either by the so-called "sulphate" process or the "chloride" process and can be anatase titanium dioxide or rutile titanium dioxide.

The titanium dioxide particles used in the present invention are coated with a hydrous oxide of silicon or aluminium or a coating comprising a mixture of hydrous oxides of silicon and aluminium. The actual amount of the coating present is such that there is sufficient to effectively exchange with the corrosion inhibiting cation to produce the desirable anticorrosive effect. Consequently the coating comprises at least 5 weight per cent expressed as total oxides ($SiO_2$ and/or $Al_2O_3$) on $TiO_2$. Preferably the coating will comprise from 5% to 25% and more preferably 10% to 25% by weight expressed as oxide on $TiO_2$.

When both hydrous silica and hydrous alumina are present the proportions of oxides can vary widely. However, it is preferred that the ratio of $SiO_2$ to $Al_2O_3$ is between 1:1.5 and 6:1.

The coating can be carried out by any of the methods which are well known in the art of coating titanium dioxide pigments provided a coating of hydrous silica and/or hydrous alumina is produced. Typically an aqueous dispersion of the titanium dioxide is mixed with a hydrolysable compound of silicon and/or aluminium and hydrolysis is effected by the addition of a suitable reagent. For example an alkali metal silicate can be used as a precursor for the hydrous silica coating and aluminium sulphate can be the source of the hydrous alumina coating.

Depending upon the pH of the dispersion of the titanium dioxide particles hydrolysis and precipitation may require the addition of an acid or alkali as the reagent.

Following coating with hydrous silica and/or alumina the titanium dioxide pigment is washed and may be dried and ground to produce particles with the correct size to possess satisfactory pigmentary properties. The average particle size is from 200 to 400 nm and preferably from 250 to 350 nm.

A particularly convenient form of coated titanium dioxide which may be used to form the products of the invention is one that is commercially available as a white pigment.

The corrosion inhibiting pigments of the current invention are prepared from the coated titanium dioxide described above by chemically binding corrosion inhibiting cations to the surface by ion-exchange.

These cations are calcium ($Ca^{2+}$), zinc ($Zn^{2+}$), lithium ($Li^{2+}$), barium ($Ba^{2+}$), magnesium ($Mg^{2+}$), strontium ($Sr^{2+}$), cobalt ($Co^{2+}$) and lead ($Pb^{2+}$) but the preferred cations are $Ca^{2+}$ or $Zn^{2+}$.

Typically the exchange is carried out by stirring a suspension of the coated titanium dioxide in water usually at room temperature and adding a source of the corrosion inhibiting cations. The pH of the mixture is closely monitored and is not allowed to rise above 10.5 when silica is present in the outer coating on the titanium dioxide or 12.5 when this outer coating is only alumina.. The source of corrosion inhibiting cations is normally a base (e.g. calcium hydroxide) and preferably the rapid dissolution of these cations is avoided by carrying out the exchange in a solution of a highly soluble salt of the said cation (e.g. calcium chloride). The uptake of cations is monitored by following the change in pH and uptake is complete when the pH no longer falls. The corrosion inhibiting pigment is then separated, dried and if necessary milled to break up any aggregates formed.

The amount of cation which is exchanged on to the surface of the coated titanium dioxide will depend to some extent on the amount of hydrous silica and/or alumina present. However a minimum amount of cation is necessary in order to produce a corrosion inhibiting effect and the lower limit is 0.1 millimoles/gram based on final corrosion inhibiting pigment. In practice it has been found that up to 0.5 millimoles/g of final pigment can be exchanged and the most preferred range is from 0.2 to 0.4 millimoles/g.

Protective coating compositions containing the corrosion inhibiting pigments described above are included in the present invention. These coatings may be based on film forming resins and include any of the coatings normally described as paints, lacquers and varnishes. Particularly useful coatings are primer paints for metals which may be based on alkyd resins, chlorinated rubbers, epoxy resins or vinyl resins.

The quantity of pigment used in the protective coating will depend upon the balance of pigmentary and corrosion inhibiting effects desired in a particular application but the preferred concentration is from 5% to 50% by weight based on protective coating.

## Example 1

An anticorrosive pigment of the type described in this invention was prepared using a commercial titanium dioxide pigment, sold under the Registered Trade Mark, Tioxide R-XL, which is coated with hydrous silica and hydrous alumina at levels of 10% w/w and 5% w/w on titanium dioxide respectively. 500g of this pigment were dispersed in 1 litre of a 1 molar calcium chloride solution by stirring, and the pH raised from its initial value, of approximately 5, to approximately 10 by the addition of small portions of solid calcium hydroxide. The pH was observed to fluctuate during the addition, rising as portions of the calcium hydroxide dissolved, and falling back somewhat as the $Ca^{++}$ ions in solution were exchanged with H+ ions on the coating. A total of 9.68g of the calcium hydroxide was added. After stirring for a further 15 minutes after the last addition, the mixture was filtered using a Buchner funnel, the solid washed with 400 $cm^3$ of demineralised water and dried at 110°C. The dry powder was then air-micronised to break up any aggregates formed during the ion-exchange process.

On analysis, the ion-exchanged pigment was found to contain 1.86% w/w calcium expressed as calcium oxide, compared to 0.06% w/w before the ion-exchange process, showing that virtually all the calcium used was incorporated into the pigment.

The ion-exchanged pigment prepared as described above was made up into a standard alkyd primer formulation, together with two reference pigments which were labelled for reference as follows:

Pigment A: Tioxide R-XL®

Pigment B: Calcium-exchanged Tioxide R-XL® prepared as described above.

Pigment C: Shieldex AC-5® a commercial anticorrosive pigment based on calcium-exchanged silica.

The alkyd primers were prepared using the following formulation:

| | |
|---|---|
| Anticorrosive pigment (A, B or C) | 8.4g |
| Micro blanc fixe | 9.66g |
| Talc | 12.46g |
| Synolac 463X® (50% in xylene) | 33.83g |
| 36% lead naphthenate | 0.336g |
| 10% cobalt naphthenate | 0.154g |
| Methyl ethyl ketoxime | 0.07g |

The paints were applied to cleaned mild steel panels at a dry film thickness of 40-50 μm, and the exposed surfaces of the plates coated with wax. The paints prepared using pigments A and B were white but that containing pigment C possessed very little hiding power. Two panels were made from each of the paints, and the painted face of one of each pair of panels was scribed with a cross down to the bare metal. All the plates were then placed in a salt spray cabinet operating at ambient temperature for a period of 1200 hours. The panels were removed and assessed for evidence of corrosion, with the following results:

| Pigment | Condition of Intact Panel | Condition of Scribed Panel |
|---|---|---|
| A | Minute rusting, very few blisters | Rust spreading 0-1 mm from the scribe, medium density blistering over most of the surface covering corrosion under the paint film |
| B | Minute rusting, very few blisters. | Rust spreading 0-0.5 mm from the scribe, medium density blistering at the scribe |
| C | Rust spotting over 0.3-1% of the surface, corrosion under the paint film over about 5% of the surface | Rust spreading 0-0.5 mm from the scribe, dense blistering at the scribe. Medium density blistering covering corrosion under the film paint film over about 50% of the surface |

**Example 2**

Two further anticorrosive pigments of the type described in this invention were prepared using commercial titanium dioxide pigments, sold under the Registered Trade Marks TIOXIDE R-XL and TIOXIDE TR50. An ion-exchanged titanium dioxide pigment was prepared from TIOXIDE R-XL in the same way as in Example 1, by dispersing 500g of TIOXIDE R-XL in 1 litre of a 1 molar calcium chloride solution by stirring, slowly adding 9.68g of solid calcium chloride in small portions, filtering off the solids, washing with demineralised water, drying at 105°C, and air-micronising.

TIOXIDE TR50 is also coated with hydrous silica and alumina, but at lower levels than TIOXIDE R-XL these levels being 6% w/w and 3% w/w on titanium dioxide respectively. An ion-exchanged titanium dioxide was pre-

4

pared by dispersing 500g of TIOXIDE TR50 in 1 litre of a 1 molar solution of calcium chloride by stirring, slowly adding 5.74g of solid calcium hydroxide in small portions, filtering off the solids on a Buchner funnel, washing with 400 cm$^3$ of demineralised water, drying at 105°C and air-micronising.

Analysis of these pigments showed the ion-exchanged R-XL contained 1.39% w/w calcium expressed as calcium oxide and the ion-exchanged TR50 contained 0.92% w/w calcium expressed as calcium oxide.

The two ion-exchanged pigments described in this example were incorporated into an alkyd undercoat paint system, together with the two standard pigment grades, the pigments being labelled for reference as follows:

Pigment D:     TIOXIDE R-XL®
Pigment E:     Calcium-exchanged TIOXIDE R-XL® prepared as above
Pigment F:     TIOXIDE TR50®
Pigment G:     Calcium-exchanged TIOXIDE TR50® prepared as above.

Alkyd undercoat paints were prepared using the following formulation:

| | |
|---|---|
| Anticorrosive pigment (D,E,F or G) | 132g |
| Talc | 41g |
| Dolomite | 122g |
| Synolac 44WF® (40% in white spirit) | 198g |
| White spirit | 71g |
| Dispersant | 1.6g |
| Mixed driers | 4g |
| Methyl ethyl ketoxime | 1g |

These paints were thinned to a viscosity of 10.5 poise and applied to cleaned mild steel panels by spinning, and the dry, painted panels scribed with a cross down to the metal. All the panels were then exposed in a salt-spray cabinet at 35°C for 1170 hours. After this period they were removed, and assessed for corrosion with the following results:

| Pigment | Conditions of Scribed Panel |
|---------|------------------------------|
| D | Rust at the scribe, and some flaking of the paint film from the scribe exposing corrosion under the paint film. Some large blisters on the film surface. |
| E | Rust at the scribe, some medium-size blisters over the paint surface. |
| F | Rust at the scribe, and many medium-sized blisters over the paint surface with rust breaking through. |
| G | Rust at the scribe, and slight flaking of the paint film from the scribe exposing corrosion under the paint film. Some large blisters over the paint surface. |

## Example 3

In another experiment, TIOXIDE R-XL was used to prepare a strontium ion-exchanged pigment of the type described by this invention. 500g of TIOXIDE R-XL was dispersed in 1 litre of 1 molar strontium nitrate by stirring, and the pH raised from its initial value, approximately 5.5, to approximately 10.5 by adding small portions of solid strontium hydroxide octahydrate. The pH was observed to oscillate slightly during the addition in the same manner as described for the preparation of the calcium ion-exchanged pigment in Example 1. A total of 19.2g of strontium hydroxide octahydrate was added, and the mixture was stirred for a further 30 minutes after the last addition. The solids were then removed by filtration on a Buchner funnel, washed with demineralised water, dried at 110°C and air-micronised to break up any aggregates. Subsequent analysis showed the pigment to contain 3.1% w/w strontium expressed as strontium oxide.

The strontium-exchanged pigment was tested against standard TIOXIDE R-XL and the calcium-exchanged R-XL pigment used in Example 2, which were labelled for reference as follows:

Pigment H:    TIOXIDE R-XL
Pigment I:    Calcium-exchanged TIOXIDE R-XL
Pigment J:    Strontium-exchanged TIOXIDE R-XL

Paints were made using the same alkyd undercoat formulation used in Example 2. These were thinned to 10.5 poise and applied to cleaned mild steel panels by spinning, and a second coat was applied by the same method once the first had dried. The dry panels were then scribed with a cross, and exposed in a salt-spray cabinet at 35°C for 930 hours before being removed and assessed for corrosion:

EP 0 412 686 B1

| Pigment | Condition of Scribed Panel |
|---------|---------------------------|
| H | Rust at the scribe and a severe loss of paint film adhesion starting at the scribe, with some surface rust on the exposed metal. Some large blisters over the paint surface. |
| I | Rust at the scribe, some large blisters over the paint surface. |
| J | Rust at the scribe and some loss of paint film adhesion starting at the scribe, with surface rust on the exposed metal. Some large blisters over the paint surface. |

## Claims

1. A corrosion inhibiting pigment characterised in that it comprises particles of titanium dioxide having an outer coating of hydrous silica, hydrous alumina or a mixture of hydrous silica and hydrous alumina said outer coating being present in an amount of at least 5 per cent by weight expressed as total oxides on weight of $TiO_2$ and having corrosion inhibiting cations chemically bound to the said coating by ion-exchange in an amount of at least 0.1 millimoles per gram based on weight of corrosion inhibiting pigment, the said corrosion inhibiting cations being releasable by further ion-exchange and said corrosion inhibiting cations being calcium, zinc, lithium, barium, magnesium, strontium, cobalt or lead ions.

2. A corrosion inhibiting pigment according to claim 1 characterised in that the corrosion inhibiting cations are calcium or zinc ions.

3. A corrosion inhibiting pigment according to claim 1 or 2 characterised in that the outer coating is present in an amount of from 5 to 25% by weight of the weight of titanium dioxide expressed as total oxides.

4. A corrosion inhibiting pigment according to any one of the preceding claims characterised in that the amount of corrosion inhibiting cation present is from 0.1 to 0.5 millimoles per gram of pigment.

5. A corrosion inhibiting pigment according to any one of the preceding claims in which the average particle size of said titanium dioxide is from 200 to 400 nm.

6. A method for the manufacture of a corrosion inhibiting pigment characterised in that titanium dioxide particles having an outer coating of hydrous silica, hydrous alumina or a mixture of hydrous silica and hydrous alumina which said outer coating is present in an amount of at least 5 per cent by weight expressed as total oxides on weight of $TiO_2$ and has a proportion of hydroxyl groups on the surface are contacted with an alkaline solution containing corrosion inhibiting cations the pH of the solution being sufficiently high to remove protons from the said hydroxyl groups but not greater than 10.5 when the said outer coating contains hydrous silica or 12.5 when the said outer coating is hydrous alumina alone wherein said corrosion inhibiting cations are calcium, zinc, lithium, barium, magnesium, strontium, cobalt or lead ions and the amount of corrosion inhibiting cations bound to the surface of the titanium dioxide as a result of the method is at least 0.1 millimoles per gram based on weight of corrosion inhibiting pigment.

7. A method according to claim 6 characterised in that a source of corrosion inhibiting cations is added to a

7

suspension of titanium dioxide particles in water.

8. A protective coating composition characterised in that it comprises a film forming resin and a corrosion inhibiting pigment according to any one of claims 1 to 5.

9. A protective coating composition according to claim 8 characterised in that the film forming resin is an alkyd resin, a chlorinated rubber, an epoxy resin or a vinyl resin.

10. A protective coating composition according to claim 8 or 9 characterised in that the amount of corrosion inhibiting pigment is from 5 to 50% by weight based on weight of protective coating.


**Patentansprüche**

1. Korrosion-inhibierendes Pigment, dadurch gekennzeichnet, daß es Titandioxidteilchen mit einer äußeren Beschichtung aus hydratisiertem Siliziumdioxid, hydratisiertem Aluminiumoxid oder einem Gemisch aus hydratisiertem Siliziumdioxid und hydratisiertem Aluminiumoxid enthält, wobei die äußere Beschichtung in einer Menge von mindestens 5 Gew.-%, ausgedrückt als Gesamtoxide, bezogen auf das Gewicht von $TiO_2$, vorhanden ist und durch Ionenaustausch an die Beschichtung chemisch gebundene, Korrosion-inhibierende Kationen in einer Menge von mindestens 0,1 mmol/g, bezogen auf das Gewicht des Korrosioninhibierenden Pigmentes, aufweist, wobei die Korrosion-inhibierenden Kationen durch weiteren Ionenaustausch freisetzbar sind und die Korrosion-inhibierenden Kationen Calcium-, Zink-, Lithium-, Barium-, Magnesium-, Strontium-, Cobalt- oder Bleiionen sind.

2. Korrosion-inhibierendes Pigment nach Anspruch 1, dadurch gekennzeichnet, daß die Korrosion-inhibierenden Kationen Calcium- oder Zinkionen sind.

3. Korrosion-inhibierendes Pigment nach Anspruch 1 oder 2, dadurch gekennzeichnet, daß die äußere Beschichtung in einer Menge von 5 - 25 Gew.-% des Titandioxidgewichts, ausgedrückt als Gesamtoxide, vorhanden ist.

4. Korrosion-inhibierendes Pigment nach einen der vorhergehenden Ansprüche, dadurch gekennzeichnet, daß das Korrosion-inhibierende Kation in einer Menge von 0,1 - 0,5 mmol/g des Pigmentes vorhanden ist.

5. Korrosion-inhibierendes Pigment nach einem der vorhergehenden Ansprüche, bei dem die durchschnittliche Teilchengröße des Titandioxids 200 - 400 nm ist.

6. Verfahren zur Herstellung Herstellung eines Korrosioninhibierenden Pigmentes, dadurch gekennzeichnet, daß Titandioxidteilchen mit einer äußeren Beschichtung aus hydratisiertem Siliziumdioxid, hydratisiertem Aluminiumoxid oder einem Gemisch aus hydratisiertem Siliziumdioxid und hydratisiertem Aluminiumoxid, wobei die äußere Beschichtung in einer Menge von mindestens 5 Gew.-%, ausgedrückt als Gesamtoxide, bezogen auf das Gewicht von $TiO_2$, vorhanden ist und einen Anteil von Hydroxylgruppen auf der Oberfläche aufweist, mit einer alkalischen, die Korrosion-inhibierenden Kationen enthaltenden Lösung in Kontakt gebracht wird, wobei der pH-Wert der Lösung ausreichend hoch ist, um die Protonen von den Hydroxylgruppen zu entfernen, jedoch nicht höher als 10,5 ist, wenn die äußere Beschichtung hydratisiertes Siliziumdioxid enthält oder nicht höher als 12,5 ist, wenn die äußere Beschichtung nur aus hydratisiertem Aluminiumoxid besteht, worin die Korrosioninhibierenden Kationen Calcium-, Zink-, Litium-, Barium-, Magnesium-, Strontium-, Cobalt- oder Bleiionen sind und die Menge der Korrosion-inhibierenden Kationen, die als ein Ergebnis der Methode an die Oberfläche des Titandioxids gebunden sind, mindestens 0,1 mmol/g, bezogen auf das Gewicht des Korrosioninhibierenden Pigmentes, beträgt.

7. Verfahren nach Anspruch 6, dadurch gekennzeichnet, daß eine Quelle von Korrosion-inhibierenden Kationen zu einer Suspension von Titandioxidteilchen in Wasser gegeben wird.

8. Schutzbeschichtungszusammensetzung, dadurch gekennzeichnet, daß sie ein folienbildendes Harz und ein Korrosion-inhibierendes Pigment nach einen der Ansprüche 1 - 5 umfaßt.

9. Schutzbeschichtungszusammensetzung nach Anspruch 8, dadurch gekennzeichnet, daß das folienbildende Harz ein Alkydharz, ein chlorierter Gummi, ein Epoxyharz oder ein Vinylharz ist.

10. Schutzbeschichtungszusammensetzung nach Anspruch 8 oder 9, dadurch gekennzeichnet, daß die Menge an Korrosion-inhibierendem Pigment 5 - 50 Gew.-%, bezogen auf das Gewicht der Schutzbeschichtung beträgt.


**Revendications**

1. Un pigment inhibiteur de corrosion, caractérisé en ce qu'il comprend des particules de dioxyde de titane ayant un enrobage extérieur de silice hydratée, d'alumine hydratée ou d'un mélange de silice hydratée et d'alumine hydratée, ledit enrobage extérieur étant présent en quantité d'au moins 5 % en poids exprimé en oxydes totaux par rapport au poids du $TiO_2$ et ayant des cations inhibiteurs de corrosion chimiquement liés audit enrobage par échange d'ions en quantité d'au moins 0,1 mmol/g basé sur le poids du pigment inhibiteur de corrosion, lesdits cations inhibiteurs de corrosion étant libérables par une autre opération d'échange d'ions et lesdits cations inhibant la corrosion étant des ions calcium, zinc, lithium, baryum, magnésium, strontium, cobalt ou plomb.

2. Un pigment inhibiteur de corrosion selon la revendication 1, caractérisé en ce que les cations inhibiteurs de corrosion sont des ions calcium ou zinc.

3. Un pigment inhibiteur de corrosion selon la revendication 1 ou 2, caractérisé en ce que l'enrobage extérieur est présent en quantité de 5 à 25 % en poids du poids de dioxyde de titane exprimé en oxydes totaux.

4. Un pigment inhibiteur de corrosion selon l'une quelconque des revendications précédentes, caractérisé en ce que la quantité de cations inhibiteurs de corrosion est de 0,1 à 0,5 mmol par gramme de pigment.

5. Un pigment inhibiteur de corrosion selon l'une quelconque des revendications précédentes, caractérisé en ce que la taille moyenne de particules dudit dioxyde de titane et de 200 à 400 nm.

6. Un procédé de fabrication d'un pigment inhibiteur de corrosion, caractérisé en ce que les particules de dioxyde de titane ayant un enrobage extérieur de silice hydraté, d'alumine hydratée ou d'un mélange de silice hydratée et d'alumine hydratée, ladite couche d'enrobage extérieur étant présente en quantité d'au moins 5 % en poids exprimée en oxydes totaux, par rapport au poids de $TiO_2$ et ayant une proportion de groupes hydroxyles sur la surface sont mises en contact avec une solution alcaline contenant des cations inhibiteurs de corrosion, le pH de la solution étant suffisamment élevé pour éliminer les protons desdits groupes hydroxyles mais non supérieur à 10,5 lorsque ledit enrobage extérieur contient de la silice hydratée ou à 12,5 lorsque ledit enrobage extérieur est de l'alumine hydratée seule, selon laquelle les cations inhibiteurs de corrosion sont des ions calcium, zinc, lithium, baryum, magnésium, strontium, cobalt ou plomb et la quantité de cations inhibiteurs de corrosion liés à la surface du dioxyde de titane comme un résultat du procédé est d'au moins 0,1 mmol/g basé sur le poids du pigment inhibiteur de corrosion.

7. Un procédé selon la revendication 6, caractérisé en ce qu'une source de cations inhibiteurs de corrosion est ajoutée à une suspension de particules de dioxyde de titane dans l'eau.

8. Une composition de revêtement protecteur, caractérisée en ce qu'elle comprend une résine filmogène et un pigment inhibiteur de corrosion selon l'une quelconque des revendications 1 à 5.

9. Une composition de revêtement protecteur selon la revendication 8, caractérisée en ce que la résine filmogène est une résine alkyde, un caoutchouc chloré, une résine époxy ou une résine vinylique.

10. Une composition de revêtement protecteur selon la revendication 8 ou 9, caractérisée en ce que la quantité de pigments inhibiteurs de corrosion est de 5 à 50 % en poids basé sur le poids du revêtement protecteur.